# EUROPÄISCHE PATENTSCHRIFT

(11) **EP 0 462 501 B1**
(45) Veröffentlichungstag und Bekanntmachung des Hinweises auf die Patenterteilung: **30.11.1994**
(21) Anmeldenummer: 91109643.6
(22) Anmeldetag: 12.06.1991
(51) Int. Cl.: B65G 53/46, B65G 65/48

(54) **Zellenradschleuse mit Spaltdichtungen zum Einschleusen von Schüttgut in pneumatische Förderanlagen**
Rotary valve with clearance sealings for feeding bulk material into pneumatic conveyors
Ecluse à rotor cellulaire avec étanchéité de fentes pour écluser des matières en vrac dans un convoyeur pneumatique

(30) Priorität: 20.06.1990 DE 4019628
(43) Veröffentlichungstag der Anmeldung: 27.12.1991
(73) Patentinhaber: MOTAN VERFAHRENSTECHNIK GMBH & CO., D-88250 Weingarten (DE)
(72) Erfinder: Waeschle, Franz Josef, D-88250 Weingarten (DE)
(74) Vertreter: Riebling, Peter, Dr.-Ing.

(56) Entgegenhaltungen:
- DE-A- 1 756 754
- DE-A- 2 732 199
- DE-A- 3 218 906
- DE-A- 3 927 393

## Beschreibung

Die Erfindung betrifft eine Zellenradschleuse der im Oberbegriff der Ansprüche 1 und 5 angegebenen Art, wie z.B. aus DE-A-32 18 906 bekannt.

Bei dieser diesseits seit einiger Zeit hergestellten und vertriebenen Zellenradschleuse besteht der Gleitring aus einem PTFE-Kunststoff und dient zur Abdichtung der jeweiligen Kammern zwischen den Seitenscheiben des Zellenrad und den Lagerdeckeln gegen das Eindringen von staubförmigen Anteilen des Schüttgutes und zur Verhinderung einer Leckströmung, die andernfalls bei einem zwischen der Einlaufseite und der Auslaufseite der Schleuse bestehenden Differenzdruck durch diese Kammer hindurch entstehen würde.

Die DE-A 39 27 393 beschreibt eine Zellenradschleuse zum gesteuerten Austrag staubartiger Güter. Wesentliches Merkmal ist die radiale Verstellmöglichkeit der Flügelwände. Das Problem der Abdichtung zwischen der Zellenradschleuse und dem Gehäuse wird hier nicht behandelt.

Bei der hier vorliegenden Ausführungsform muß aber ein Mindestspalt vorgesehen werden. Die Nachteile dieses Mindestspaltes werden im weiteren Verlauf der Beschreibung erläutert.

Eine andere Zellenradschleuse ist aus der DE-A 32 18 906 bekannt. Bei dieser Zellenradschleuse ist bereits eine Abdichtung zwischen den Außenrändern der Seitenwände und dem Schleusengehäuse vorgesehen. Als Abdichtung werden Kunststoffeinsätze verwendet. Im Betrieb werden diese Kunststoffeinsätze durch das Zusammenspiel zwischen der Schleuse und dem Gehäuse auf ein bestimmtes Maß abgeschliffen. Bei einer Belastungsänderung kommt es zu einer Verschiebung der Welle im Gehäuse und damit zu Dichtigkeitsproblemen. Darüberhinaus können Abriebpartikel der Dichtungselemente in das Gut gelangen und dieses verunreinigen.

Aus der DE-C-37 42 521 ist eine Zellenradschleuse bekannt, deren Verstellmechanismus darin besteht, die Gleitringe mit einer konstanten Anpresskraft zu beaufschlagen und auf relativ zu dem Zellenrad verdrehbar angeordneten Gleitscheiben aufliegen zu lassen, die in einer exzenterähnlichen, kraftschlüssigen Verbindung mit den Dichtleistenanordnungen stehen, so daß die im wesentlichen in Umfangsrichtung wirkende Reibkraft zwischen dem jeweiligen Gleitring und der zugeordneten Gleitscheibe bestrebt ist, die Gleitscheibe entgegen der Laufrichtung des Zellenrades zu verstellen und damit die Dichtleistenanordnung radial nach außen drückt, also insoweit für diese die erforderliche Anpresskraft erzeugt.

Grundlage für diese technische Lösung ist die aus der Patentschrift DE-C-37 42 522 bekanntgewordene axiale Anpressung von seitlichen Gleitringen, mit Hilfe eines Druckfluides gesplittet in eine Halte- und Verstellkraft, auf die dem Durchmesser des Zellenrades entsprechenden Gleitscheiben.

Zellenradschleusen dieser Art haben z.B. die Langsamförderung von Kunststoffgranulat ohne Druckbehälter-Fördergefäss erst möglich gemacht, da die dafür notwendige Druckdifferenz von 2 - 3 bar von der Zellenradschleuse überwunden und die Leckströmung durch die seitliche Abdichtung in Grenzen gehalten werden konnte.

Leider werden diese Vorteile durch Verschleiß der Dichtelemente erkauft. Grundprinzip der vorbeschriebenen Lösungen ist verständlicherweise die Anordnung eines Verbrauchsmagazins am Gleitring und den radialen Dichtstegen. Je nach Einsatzbedingungen schwanken die Standzeiten dieser "zeitbegrenzten Teile", und die Verschleißrate führt zu unerwünschten Verunreinigungen des zu handhabenden Schüttgutes mit PTFE-Abriebteilchen.

Der Verschleiß wird hervorgerufen durch die Parameter Anpresskraft der Dichtungen, Drehzahl, Reibungswärme und Reibungsfaktor der gewählten Paarung Kunststoff auf vergütete Metall-Gleitscheibe bzw. Gehäusebohrung sowie den Eigenschaften des Schüttgutes, dessen feinste Partikel in die Dichtstellen gelangen.

Unerwünschter Effekt der Reibungswärme ist die Ausdehnung des Zellenrades an den Reibstellen und damit verbunden das Anlaufen im Gehäuse, das zum Zerstören des weicheren Partnerwerkstoffes bzw. zum Blockieren und Ausfall der Zellenradschleuse führt, insbesondere dann, wenn man im Grenzdrehzahlbereich arbeitet, um Schleusen mit ihrer maximal möglichen Kapität zu betreiben.

Die Problematik verschärfend ist der Einfluß der jahreszeitlich bedingten Temperaturschwankung, die in Verbindung mit der Prozeßtemperatur zu unterschiedlichsten Temperaturen von Gehäuse und Zellenrad führt und damit zu einer dauernden Spaltveränderung zwischen Gehäuse und Zellenrad beiträgt. Der Mindestspalt muß also so ausgelegt sein, daß außerdem die durch die zu erwartende Druckdifferenz zwischen Ein- und Auslauf entstehende Durchbiegung der Zellenradwelle, die in der Praxis selbst bei großer Dimensionierung von Wellendicke und Kugellager noch bei 0,10 - 0,15 mm Versatz des Zellenrades nach oben im Gehäuse liegt, aufgenommen werden kann.

Der Erfindung liegt die Aufgabe zugrunde, bei einer Zellenradschleuse der eingangs genannten Gattung die seitliche Abdichtung so zu verbessern, daß die Anpreßkraft entfällt, daß ein möglicher Einfluß einer Restreibungswärme sich vergrößernd auf den Gehäusedurchmesser auswirkt, daß die Auswirkung der Durchbiegung kompensiert wird, daß eine mögliche Auswahl der Werkstoffe aufs Schüttgut bezogen nicht eingeschränkt wird und daß die von der Industrie zum Standard erhobene Schnellreinigung noch durchführbar ist.

Diese Aufgabe wird erfindungsgemäss durch die technische Lehre des Anspruches 1 oder des Anspruches 5 gelöst.

Der Erfindung liegt der Gedanke zugrunde, daß man nun die Abdichtanordnung zwischen dem Gehäuse und dem Zellenrad nicht mehr auf der Gehäuseseite anordnet, sondern auf der Zellenrad-Seite.

Hierbei gibt es mehrere verschiedene Ausführungsformen.

In einer ersten Ausführungsform ist vorgesehen, daß mit dem Zellenrad axial ein Stützflansch verbunden ist, der seinerseits einen Gleitring trägt.

Für die Ausbildung dieses Gleitringes gibt es hierbei zwei verschiedene Ausführungsformen.

In einer ersten Ausführungsform ist der Gleitring fest mit dem Stützflansch verbunden und dreht sich somit zusammen mit dem Zellenrad, während in einer zweiten Ausführungsform der Gleitring drehbar auf dem Stützflansch des Zellenrades angeordnet ist und somit stationär im Gehäuse angeordnet ist.

Mit dieser Ausführung eines Gleitringes in zwei verschiedenen Ausführungsformen wird also der wesentliche Vorteil erzielt, daß sich der Gleitring jeglicher Bewegung, insbesondere einer Durchbiegung, des Zellenrades anpasst.

Bisher musste man ein gewisses radiales Spiel zwischen dem Zellenrad und den zugeordneten Dichtflächen am Gehäuse lassen, um eben Temperaturausdehnungen des Zellenrades zu kompensieren.

Nach der vorliegenden Erfindung ist dies nicht mehr notwendig, weil der Gleitring in seinen zwei verschiedenen Lagerausführungen nun jegliche Bewegung und damit auch das Temperaturspiel des Zellenrades mitmacht und daher das vorher konstruktiv notwendig gewesene Spiel zwischen dem Zellenrad und dem Gehäuse nun erfindungsgemäss wesentlich verringert werden kann.

Verformungen des Zellenrades finden nicht nur allein durch Temperaturspiel statt, sondern zusätzlich auch noch durch eine Durchbiegung der Welle des Zellenrades durch die Druckdifferenz zwischen dem Einlauftrichter und dem Auslauftrichter der Zellenradschleuse.

Derartige Verformungen des Zellenrades brauchen nun erfindungsgemäss nicht mehr berücksichtigt zu werden, d.h. der vorher aus den genannten konstruktiven Gründen zwangsweise sich einstellende Leckluftstrom nun erfindungsgemäss wesentlich verringert werden kann, weil bei dem Spaltdichtbereich das Bewegungsspiel zwischen dem Zellenrad und den zugeordneten Dichtflächen am Gehäuse wesentlich verringert werden kann.

Der Kern der vorliegenden Erfindung liegt also darin, daß man auf der Welle des Zellenrades eine Dichtanordnung drehbar lagert, welche Dichtanordnung alle Bewegungen der Welle des Zellenrades mitmacht. Hierunter fällt das Temperaturspiel als auch das Verformungsspiel, welchem das Zellenrad unterworfen ist.

Dadurch, daß diese Dichtanordnung alle Bewegungen des Zellenrades mitmacht, kann man eben erfindungsgemäss die radialen Spalte geringer ausführen, ohne daß die Gefahr besteht, daß ein unzulässiges Verformungsspiel zu einem Aufreiben dieser Dichtflächen führt.

In der zweiten Ausführung nach der vorliegenden Erfindung ist ein sogenannter "schwimmender" Gleitring vorgesehen, der unter radialem Spiel schwimmend in einer Gehäusenut gelagert ist. Diesem Ring radial einwärts gegenüberliegend ist der zugeordnete Stützflansch des Zellenrades angeordnet. Dadurch wird gewährleistet, daß wenn das Zellenrad ein entsprechendes radiales Ausdehnungsspiel mitmacht, daß dann dieser Stützflansch kurzzeitig auf den schwimmend gelagerten Dichtring aufläuft, diesen entsprechend radial im Gehäuse verschiebt und dadurch trotzdem die Dichtungsfunktion voll aufrecht erhalten bleibt.

Auch mit dieser zweiten Ausführungsform wird also der Vorteil erreicht, daß man den Abrieb vermindert hat und die Dichtungsspalten entsprechend geringer dimensionieren kann.

Die Erfindung wird nun anhand von zwei Ausführungsbeispielen unter Bezugnahme auf die Zeichnungen näher beschrieben. Hierbei gehen aus der Zeichnung und ihrer Beschreibung weitere Merkmale und Vorteile der Erfindung hervor.

Figur 1 zeigt schematisiert einen Teilschnitt durch eine Zellenradschleuse nach der Erfindung mit einer ersten Ausführungsform einer Dichtanordnung.

Figur 2 zeigt schematisiert im Schnitt eine zweite Ausführungsform einer Dichtungsanordnung.

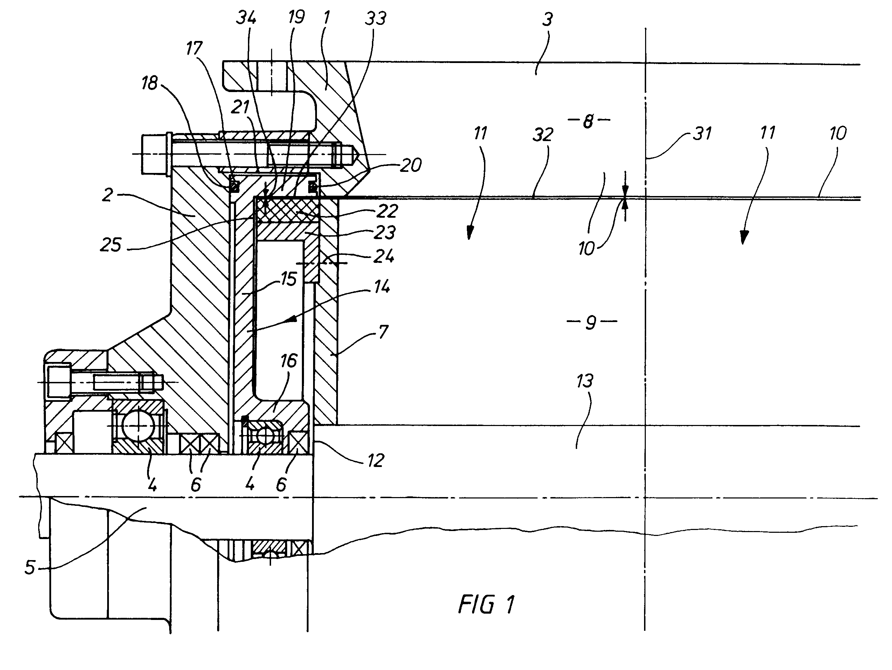

Die Zellenradschleuse nach der vorliegenden Erfindung ist in Figur 1 lediglich als Teilschnitt dargestellt, wobei nur die linke Seite der Zellenradschleuse dargestellt ist, während jenseits der Symmetrielinie 31 sich alle Teile wiederholen. Aus Vereinfachungsgründen wird daher nur die linke obere Seite der Zellenradschleuse dargestellt, zumal diese Zellenradschleuse genau rotationssymmetrisch ausgebildet ist.

In einem Gehäuse 1 ist ein Einlauftrichter 3 an der oberen Seite angeordnet, wobei das Gehäuse 1 seitlich durch Seitendeckel 2 abgeschlossen ist.

Im Gehäuse 1 und zwar im Bereich des Seitendeckels 2, sind Kugellager 4 angeordnet, welche eine Welle 13 tragen. Die Welle 13 bildet jeweils an den axial außenliegenden Seiten einen Wellenstumpf 5, in dessen Bereich die Kugellager 4 zusammen mit Simmerringen 6 angeordnet sind.

Die Welle 13 ist Teil des Zellenrades 11, wobei das Zellenrad 11 aus radial am Umfang verteilt angeordneten Stegen 8 besteht, wobei zwischen zwei Stegen 8 jeweils eine Zellenrad-Kammer 9 ausgebildet wird.

Jede Zellenradkammer 9 wird axial durch eine Seitenscheibe 7 begrenzt.

Zwischen der Oberkante des Steges 8 und der zugeordneten Gehäusebohrung 32 ergibt sich ein Abstand 10, der so groß ist, daß er eine Durchbiegung des Zellenrades 11 bei Maximaldruck und bei entsprechendem Temperaturspiel noch zulässt, ohne daß es zu einer metallischen Berührung kommt.

Die erfindungsgemässe Dichtungsanordnung besteht im wesentlichen nach dem ersten Ausführungsbeispiel aus einem Dichtungsteller 14, der eine radial einwärts liegende Lagernabe 16 aufweist, die über einen Simmerring 6 und ein Kugellager 4 auf dem Wellenstumpf 5 drehbar gelagert ist.

An ihrem radial äußeren Ende bildet der Dichtungsteller 14 einen Ringflansch 19, der sich mit jeweils einem axialen Ende einwärts erstreckt.

Der Ringflansch 19 trägt axial liegende O-Ringe 18, 20, wobei er sich mit dem O-Ring 18 an der axialen Seitenfläche des Seitendeckels 2 abstützt und mit dem O-Ring 20 an einem Absatz im Gehäuse 1 abstützt.

An der axial äußeren Seite der Seitenscheibe 7 ist ein abgekröpfter Stützflansch 23 über Schrauben 24 verbunden, welcher Stützflansch 23 auf seinem radial äußeren Ende einen sich mitdrehenden Gleitring 22 trägt. D.h. der Gleitring 22 ist drehfest mit dem Stützflansch 23 verbunden.

Der Gleitring kann aus jeder Art von Kunststoff bestehen, aus gehärtetem Metall oder aus Keramik.

Der Dichtungsteller 14 kann aus den gleichen Materialien bestehen.

Der Dichtungsteller 14 bildet in dem oberen, radialen Bereich, in dem die O-Ringe 18,20 angeordnet sind, einen Ansatz 17 aus Materialersparnisgründen. Hierdurch wird vermieden, daß die gesamte Stirnseite des Dichtungstellers 14 bearbeitet werden muß.

Erfährt nun die Welle 13 eine Verformung, dann wird somit der mit der Welle 13 und dem Zellenrad fest verbundene Stützflansch 23 mitgenommen und nimmt somit auch den darauf fest angeordneten Gleitring 22 mit.

Gleichzeitig wird dieses Verformungsspiel aber dem drehbar auf dem Wellenstumpf 5 angeordneten Dichtungsteller 14 mitgeteilt, der somit ein gleiches Verformungsspiel erfährt.

Auf diese Weise wird gewährleistet, daß der Dichtungskanal 33, der sich zwischen der radial äußeren Seite des Gleitringes 22 und der zugeordneten Innenseite des Dichtungstellers 14 im Bereich des Ringflansches 19 bildet, stets auf gleichbleibendem Spiel gehalten wird, wobei dieses Spiel 34 kleiner ist als der Abstand 10 zwischen dem Gehäuse 1 und dem Steg 8.

Erfindungsgemäss wird nun damit dieses Spiel 34 im Dichtungskanal 33 wesentlich kleiner als der Abstand 10 zwischen dem Gehäuse 1 und dem Zellenrad 11, so daß damit eine ausgezeichnete Abdichtung des Leckluftstromes in diesem Bereich gewährleistet ist.

Hierbei ist wichtig, daß im Bereich radial auswärts des Flansches 19 des Dichtungstellers 14 ein Spiel 21 vorhanden ist, welches das notwendige Bewegungsspiel des Dichtungstellers 14 darstellt. Nur auf diese Weise wird gewährleistet, daß der Dichtungsteller 14 sich zusammen mit dem Zellenrad in radialer Richtung ausdehnen kann.

Eine Abdichtung ist hierbei durch die beiden seitlich angeordneten O-Ringe 18, 20 immer gewährleistet.

Nachdem der Dichtungsteller 14 stehenbleibt bei der Drehung des Zellenrades (wegen der Lageranordnung 4,6), kommt es auch im Bereich der O-Ringe 18,20 zu keinem Verschleiß.

Das axiale Spiel 25 der Dichtungsanordnung wird mit an und für sich bekannten Mitteln fest eingestellt und zwar über eine Federanordnung, welche federbelastet die gesamte Anordnung in axialer Richtung vorspannt.

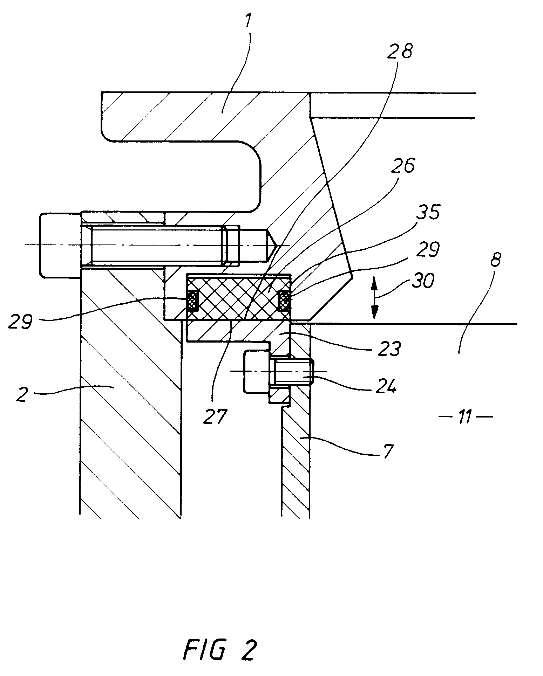

In Figur 2 wird nun eine zweite Ausführungsform der vorliegenden Erfindung beschrieben. Hierbei gelten bezüglich des Gehäuses und des Zellenrades die gleichen Erläuterungen, wie sie anhand der Figur gegeben wurden.

Im Unterschied zur Dichtungsanordnung nach Figur 1 ist jedoch hier im Gehäuse 1 eine radiale Nut 35 vorgesehen, in welche ein Gleitring 26 eingesetzt ist, welcher Gleitring stirnseitig umlaufende O-Ringe 29 aufweist.

Über die O-Ringe 29 erfolgt hierbei die axiale Abdichtung des Gleitringes 26 an den zugeordneten Seitenflächen der Nut 35.

Mit der Seitenscheibe 7 des Zellenrades 11 wiederum fest verbunden ist der Stützflansch 23, der jetzt eine obere, radiale Dichtfläche 27 aufweist, der eine untere , radial einwärts gerichtete Dichtfläche 28 des Gleitringes 26 gegenüber steht.

Wichtig ist nun, daß der Gleitring 26 in der Nut 35 unter radialem Spiel schwimmend gelagert ist, so daß er radial auswärts und einwärts sich bewegen kann. Der Gleitring 26 nach Figur 2 kann deshalb auf einfache Weise in die Nut 35 eingelegt werden, weil das Gehäuse parallel zur Welle 5 geteilt ist.

Kommt es nun zu einer Verformung des Zellenrades 11, dann läuft der Stützflansch 23 kurzzeitig mit seiner Dichtfläche 27 auf die zugeordnete Dichtfläche 28 des Gleitringes 26 auf, die ausweicht, weil eben dieser Gleitring 26 schwimmend in der Nut 35 im Gehäuse gelagert ist. Auf diese Weise wird somit immer eine konstante Dichtgeometrie zwischen den Dichtflächen 27,28 unabhängig von einem Verformungsspiel des Zellenrades 11 selbst gewährleistet.

Als Material für den Gleitring 26 wird hierbei ein abriebarmes Kunststoffmaterial, wie z.B. PTFE, bevorzugt, während bei dem Gleitring 22 nach Figur 1 auch Metallmaterialien verwendet werden können.

Als Material für den Stützflansch 23 nach Figur 2 wird bevorzugt ein Chrom-Nickelstahl verwendet.

In der vorliegenden Erfindung wird also der wesentliche Vorteil erzielt, daß man unabhängig von jeglicher radialer Verformung des Zellenrades 11 nun einen stets gleichbleibenden Dichtspalt zwischen Dichtflächen des Zellenrades und den zugeordneten Dichtflächen des Gehäuses gewährleistet, wobei dieser Dichtspalt berührungslos ist, d.h. es erfolgt in diesem Bereich kein Abrieb, der ansonsten mit dem Nachteil verbunden ist, daß Abriebteilchen in das Schüttgut eingeschleust werden.

Es wird also ein wesentlicher Vorteil bei der Abdichtung derartiger Zellenradschleusen erreicht.

## Patentansprüche

1. Zellenradschleuse zum Einschleusen von Schüttgut in eine pneumatische Förderanlage mit einem Gehäuse (1), mit einem gehäusefesten Einlauftrichter (3), ferner mit einer Welle (5,13), an der drehfest Stege (8) befestigt sind, die Zellenradkammern (9) ausbilden, die stirnseitig von Seitendeckeln (2) begrenzt sind, und mit Abdichtanordnungen für axial und radial verlaufende Spalten (33) an den Stirnseiten,
**dadurch gekennzeichnet,** daß die Abdichtung der Abdichtanordnung zwischen einem Gleitring (22), der auf einem axialen, abgekröpften Stützflansch (23) sitzt, der an der Seitenscheibe (7) des Zellenrades (11) angebracht ist, und dem Ringflansch (19) eines Dichtungstellers (14), der zwischen dem Gehäuse (1) und dem Seitendeckel (2) auf dem Wellenstumpf (5) drehbar gelagert ist, an dessen Innenseite der Stützflansch (23) und der Gleitring (22) mit axialem und radialem Spiel (25,34) umlaufen, wodurch ein Dichtungskanal gebildet wird, stattfindet.

2. Zellenradschleuse nach Anspruch 1,
**dadurch gekennzeichnet,** daß der Dichtungsteller (14) eine radial einwärts liegende Lagernabe (16) aufweist.

3. Zellenradschleuse nach einem der Ansprüche 1 bis 2, **dadurch gekennzeichnet,** daß der Ringflansch gegenüber dem Gehäuse (1) und dem Seitendeckel (2) mit O-Ringen (18,20) abgedichtet ist.

4. Zellenradschleuse nach einem der Ansprüche 1 bis 3, **dadurch gekennzeichnet,** daß der Dichtungsteller (14) mit seiner Lagernabe (16) über ein Kugellager (4) auf den Wellenstumpf (5) des Zellenrades (11) angeordnet ist und seitlich gegenüber dem Zellenrad (11) eine Abdichtung in Form eines Simmerrings (6) aufweist.

5. Zellenradschleuse zum Einschleusen von Schüttgut in eine pneumatische Förderanlage mit einem Gehäuse (1), mit einem gehäusefesten Einlauftrichter (3), ferner mit einer Welle (5, 13), an der drehfest Stege (8) befestigt sind, die Zellenradkammern (9) ausbilden, die stirnseitig von Seitendeckeln (2) begrenzt sind, und mit Abdichtanordnungen für axial und radial verlaufende Spalten (33) an den Stirnseiten, **dadurch gekennzeichnet,** daß die Abdichtung der Abdichtanordnung zwischen einem abgekröpften Flansch (23) an der Seitenscheibe (7) des Zellenrades (11) und einem in einer Radialnut des Gehäuses (1) radial beweglichen, stirnseitig mit elastischen Dichtungselementen (29) versehenen, Gleitring (26) stattfindet.

6. Zellenradschleuse nach Anspruch 5,
**dadurch gekennzeichnet,** daß der Gleitring (26) in einer radialen Nut (35) des Gehäuses (1) schwimmend gelagert ist und hierbei seitlich Abdichtungen in Form von O-Ringen (29) vorgesehen sind.

## Claims

1. A bucket wheel sluice for the feeding of loose material into a pneumatic conveying installation with a housing (1), with an inlet funnel (3) fixed to the housing, and also with a shaft (5,13), on which cross-pieces (8) are attached so as to be secure with respect to torsion, which form bucket wheel chambers (9), which are delimited on the end face by lateral covers (2), and with sealing arrangements for gaps (33) running axially and radially on the end faces, characterised in that the sealing of the sealing arrangement takes place between a slide ring (22) which sits on an axial, angularly bent supporting flange (23), which is arranged on the lateral disc (7) of the bucket wheel (11), and the annular flange (19) of a sealing plate (14), which is rotatably mounted between the housing (1) and the lateral cover (2) on the shaft butt (5), on the inner side of which the supporting flange (23) and the slide ring (22) revolve with axial and radial play (25,34), whereby a sealing channel is formed.

2. A bucket wheel sluice according to Claim 1, characterised in that the sealing plate (14) has a bearing hub (6) lying radially inwards.

3. A bucket wheel sluice according to one of Claims 1 to 2, characterised in that the annular flange is sealed with respect to the housing (1) and the lateral cover (2) with O-rings (18,20).

4. A bucket wheel sluice according to one of Claims 1 to 3, characterised in that the sealing plate (14) is arranged with its bearing hub (16) via a ball bearing (4) on the shaft butt (5) of the bucket wheel (11) and laterally with respect to the bucket wheel (11), has a seal in the form of a sealing ring (6).

5. A bucket wheel sluice for the feeding of loose material into a pneumatic conveying installation with a housing (1), with an inlet funnel (3) fixed to the housing, and also with a shaft (5,13), on which cross-pieces (8) are attached so as to be secure with respect to torsion, which form bucket wheel chambers (9), which are delimited on the end face by lateral covers (2), and with sealing arrangements for gaps (33) running axially and radially on the end faces, characterised in that the sealing of the sealing arrangement takes place between an angularly bent flange (23) on the lateral disc (7) of the bucket wheel (11) and a slide ring (26) which is radially movable in a radial groove of the housing (1) and is provided on the end face with elastic sealing elements (29).

6. A bucket wheel sluice according to Claim 5, characterised in that the slide ring (26) is mounted so as to float in a radial groove (35) of the housing (1) and therewith seals are provided laterally in the form of O-rings (29).

## Revendications

1. Ecluse à roue cellulaire pour l'introduction de matières en vrac dans une installation de transport pneumatique, comportant un bâti (1), une trémie d'entrée (3) solidaire du bâti ainsi qu'un arbre (5,13) auquel sont fixées des ailettes (8), solidaires en rotation de cet arbre, qui forment des chambres de roue cellulaire (9), lesquelles sont limitées, sur leurs faces d'extrémité, par des couvercles latéraux (2), et munie de structures d'étanchéité pour des interstices (33) s'étendant dans les directions axiale et radiale le long des faces d'extrémité, caractérisée en ce que l'étanchéité assurée par la structure d'étanchéité se fait entre un anneau de glissement (22) qui repose sur une collerette d'appui axiale coudée (23), laquelle est rapportée sur le flasque latéral (7) de la roue cellulaire (11), et le rebord annulaire (19) d'un disque d'étanchéité (14) qui est monté en rotation libre sur le bout d'arbre (5), entre le bâti (1) et le couvercle latéral (2), et devant la face intérieure duquel tournent, avec un jeu axial et radial (25,34), la collerette d'appui (23) et l'anneau de glissement (22), grâce à quoi un canal d'étanchéité est défini.

2. Ecluse à roue cellulaire selon la revendication 1, caractérisée en ce que le disque d'étanchéité (14) présente un moyeu porte-palier (16) situé radialement à l'intérieur.

3. Ecluse à roue cellulaire selon l'une des revendications 1 et 2, caractérisée en ce que le rebord annulaire est rendu étanche par rapport au bâti (1) et au couvercle latéral (2) à l'aide de joints toriques (18,20).

4. Ecluse à roue cellulaire selon l'une des revendications 1 à 3, caractérisée en ce que le disque d'étanchéité (14) est, par son moyeu porte-palier (16), mis en place sur le bout d'arbre (5) de la roue cellulaire (11), au moyen d'un palier à billes (4), et présente latéralement, par rapport à la roue cellulaire (11), une étanchéité sous la forme d'une bague à lèvres avec ressort (6).

5. Ecluse à roue cellulaire pour l'introduction de matières en vrac dans une installation de transport pneumatique, comportant un bâti (1), une trémie d'entrée (3) solidaire du bâti ainsi qu'un arbre (5,13) auquel sont fixées des ailettes (8), solidaires en rotation de cet arbre, qui forment des chambres de roue cellulaire (9), lesquelles sont limitées, sur leurs faces d'extrémité, par des couvercles latéraux (2), et munie de structures d'étanchéité pour des interstices (33) s'étendant dans les directions axiale et radiale le long des faces d'extrémité, caractérisée en ce que l'étanchéité assurée par la structure d'étanchéité se fait entre une collerette coudée (23) du flasque latéral (7) de la roue cellulaire (11) et un anneau de glissement (26) apte à se mouvoir radialement dans une gorge radiale du bâti (1) et pourvu, sur ses faces d'extrémité, d'éléments d'étanchéité élastiques (29).

6. Ecluse à roue cellulaire selon la revendication 5, caractérisée en ce que l'anneau de glissement (26) est monté flottant dans une gorge radiale (35) du bâti (1) et est muni latéralement, à cet endroit, d'éléments d'étanchéité en forme de joints toriques (29).
